# EUROPEAN PATENT APPLICATION

(11) **EP 4 495 566 A1**
(43) Date of publication of application: **22.01.2025**
(21) Application number: 23306263.7
(22) Date of filing: 21.07.2023
(51) Int. Cl.: G01M 3/22

(54) **DETECTION METHOD FOR DETECTING LEAKAGES ON A HYDROGEN PIPING SYSTEM**

(71) Applicant: ALSTOM Holdings, 93400 Saint-Ouen-sur-Seine (FR)
(72) Inventor: OBERT, Jérémie, 78510 TRIEL SUR SEINE (FR)
(74) Representative: Lavoix

(57) **Abstract**

The detection method for detecting leakages in a hydrogen piping system (10) comprises injecting a pressurized tracing gas into the hydrogen piping system (10) and moving a tracing gas detection device (18) along the hydrogen piping system (10).

## Description

The present invention relates to a detection method for detecting leakages on a hydrogen piping system. The invention is, as an example, applied in a hydrail, i.e. a rail vehicle using on-board hydrogen fuel as a source of energy to power traction motors, or auxiliaries, or both.

A hydrogen leak is a source of hazard because such a leakage can lead to fire or explosion. Thus, is it necessary to preventively detect leakages, in particular during maintenance, in order to decrease risks.

However, in case of a low or medium pressure system, leakages may be difficult to detect, because the flow of leakage is low in such a system.

The invention is intended to facilitate the detection of leakages, in a secured manner.

To this end, the invention relates to a detection method for detecting leakages in a hydrogen piping system, characterized in that it comprises:
- injecting a pressurized tracing gas into the hydrogen piping system, and
- moving a tracing gas detection device along the hydrogen piping system.

The injection of a tracing gas allows using a pressurized gas which is inert. Indeed, injecting hydrogen would be dangerous, whereas an inert gas has no danger so it can be injected and tested in close proximity.

The substantial flow leakage of tracing gas can now be easily detected by the detector.

A detection method according to the invention may comprise any of the following features, taken alone or in any possible combination.
- The tracing gas is N₂ or H₂N₂, and the detection device is configured to detect H₂N₂.
- The hydrogen piping system equips a vehicle, in particular a railway vehicle.
- The hydrogen piping system is a low pressure system or a medium pressure system.

The invention also relates to a hydrogen piping system, characterized in that it comprises a fitting for connecting the hydrogen piping system with a pressurized tracing gas delivery system.

Preferentially, the fitting comprises a valve.

The invention also relates to a vehicle, in particular a railway vehicle, characterized in that it comprises a hydrogen piping system as disclosed above.

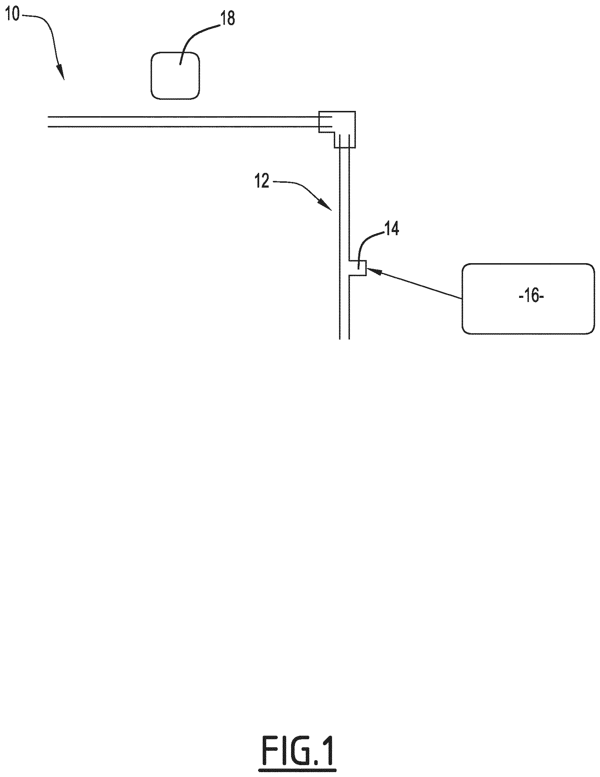

Several aspects and advantages of the invention will be enlightened in the following disclosure, given only as a non-limitative example and made in view of enclosed figure 1 that is a schematic view of a hydrogen piping system according to the invention.

Figure 1 shows a hydrogen piping system 10 according to an example of embodiment of the invention.

The hydrogen piping system 10 is, as an example, intended to equip a vehicle, preferentially a railway vehicle. As a variant, the hydrogen piping system 10 equips a refrigerator, a freezer, an air conditioner, a heating system or any other application.

The hydrogen piping system 10 comprises pipes 12 intended to convey hydrogen (H₂).

The hydrogen piping system 10 is a low pressure or medium pressure system, i.e. the pressure in the pipes is less than 13 bars.

The hydrogen piping system 10 also classically comprises a hydrogen supply device (not shown), and the pipes 12 are connected to devices intended to be fed by the hydrogen piping system 10.

According to the invention, the hydrogen piping system 10 comprises a fitting 14 for connecting the hydrogen piping system 10 with a pressurized tracing gas delivery system 16. The fitting 14 preferentially comprises a valve for injecting pressurized tracing gas only when needed, for instance during a maintenance.

The tracing gas is preferentially Nitrogen (N₂) or Diimide (H₂N₂). In case the tracing gas is Nitrogen N₂, this gas reacts with the hydrogen H₂ to become H₂N₂. It should be noticed that H₂N₂ is an inert gas, so it can be injected into the hydrogen piping system 10 without negative effect, and leakages of H₂N₂ are not dangerous.

The invention uses a tracing gas detection device 18.

The invention relates to a detection method for detecting leakages in the hydrogen piping system 10.

The detection method comprises injecting the pressurized tracing gas into the hydrogen piping system 10.

The pressurized tracing gas flows through the pipes 12, and leaks in case of defects on the hydrogen piping system 10.

The method then comprises moving a tracing gas detection device 18 along the hydrogen piping system 10, more particularly along the pipes 12. The detection device 18 is conformed to detect H₂N₂. Such a detection device 18 is known and will not be more detailed.

In other words, the detection device 18 is moved along the pipes 12 to detect H₂N₂. When H₂N₂ is detected, that means that there is a leakage nearby.

Thus, the detection method of the invention allows detecting and localizing leakages.

## Claims

1. A detection method for detecting leakages in a hydrogen piping system (10), **characterized in that** it comprises :
- injecting a pressurized tracing gas into the hydrogen piping system (10), and
- moving a tracing gas detection device (18) along the hydrogen piping system (10).

2. The detection method of claim 1, wherein the tracing gas is Nitrogen (N₂) or Diimide (H₂N₂), and the detection device is configured to detect Diimide (H₂N₂).

3. The detection method of claim 1 or 2, wherein the hydrogen piping system (10) equips a vehicle, in particular a railway vehicle.

4. The detection method of any of preceding claims, wherein the hydrogen piping system (10) is a low pressure system or a medium pressure system.

5. A hydrogen piping system (10), **characterized in that** it comprises a fitting (14) for connecting the hydrogen piping system (10) with a pressurized tracing gas delivery system (16).

6. The hydrogen piping system (10) of claim 5, wherein the fitting (14) comprises a valve.

7. A vehicle, in particular a railway vehicle, **characterized in that** it comprises a hydrogen piping system (10) according to claim 5 or 6.
